# FASCICULE DE BREVET EUROPEEN

(11) **EP 0 474 603 B1**
(45) Date de publication et mention de la délivrance du brevet: **29.12.1993**
(21) Numéro de dépôt: 91810693.1
(22) Date de dépôt: 30.08.1991
(51) Int. Cl.: G05B 19/40

(54) **Procédé et dispositif de commande d'un ou de plusieurs axes dans une machine-outil**
Verfahren und Gerät zum Steuern einer oder mehrerer Achsen einer Werkzeugmaschine
Method and means to control one or more machine tool axes

(30) Priorité: 04.09.1990 CH 2869/90
(43) Date de publication de la demande: 11.03.1992
(73) Titulaire: Tornos-Bechler SA Fabrique de Machines Moutier, CH-2740 Moutier (Kanton-Bern) (CH)
(72) Inventeur: Simonin, Jean-Claude, CH-2740 Moutier (CH); Paroz, Cedric, CH-2740 Moutier (CH)
(74) Mandataire: Fischer, Franz Josef

(56) Documents cités:
- GB-A- 2 072 379
- US-A- 3 015 806
- US-A- 3 297 929
- US-A- 3 838 258
- US-A- 4 266 170
- US-A- 4 489 260
- US-A- 4 675 825
- OPTICS AND LASER TECHNOLOGY,vol. 16, no. 2, 2 Avril 1984, HAYWARDS HEATH GB pages 87 - 92; K.C.A. CRANE et al.:"A microputer-controlled X-Y translator for CNC laser applications"
- W. SIMON: Die numerische Steuerung von Werkzeugmaschinen, Carl Hanser Verlag, Munich 1971, pages 277-280

## Description

La présente invention se rapporte au problème de la commande des machines-outils. On sait que les machines traditionnelles de type mécanique, comme par exemple les décolleteuses, comportent des cames, c'est-à-dire des pièces mécaniques contenant le programme d'usinage des pièces. Chaque came communique un mouvement à l'outil par déroulement de son profil. La liaison entre le palpeur et la came est maintenue en permanence de sorte que la position de l'outil est à chaque instant une fonction du rayon de la came à l'emplacement où celle-ci est en contact avec le palpeur. Une telle commande peut être assimilée à un réglage en boucle ouverte.

Ces dernières années, à côté de ces machines traditionnelles ont été développées des machines dites à commande numérique. Les différents "axes" de la machine sont actionnés par des actuateurs. Le programme calcule une suite de consignes qui sont transmises à des régulateurs et les moteurs des différents axes sont asservis par ces régulateurs. L'asservissement est réalisé en boucle fermée. Un capteur donne à chaque instant la position de l'axe, de sorte qu'une comparaison peut être effectuée entre la valeur de consigne et la valeur réelle. L'écart détermine un mouvement d'ajustement.

Par ailleurs, le document US-A-3 015 806 décrit une commande numérique de type standard avec déplacement linéaire: à partir de deux points donnés, une certaine trajectoire est définie et parcourue à une certaine vitesse, sans toutefois qu'un temps optimal pré-établi soit associé à chaque déplacement, contrairement à l'objet de la présente invention.

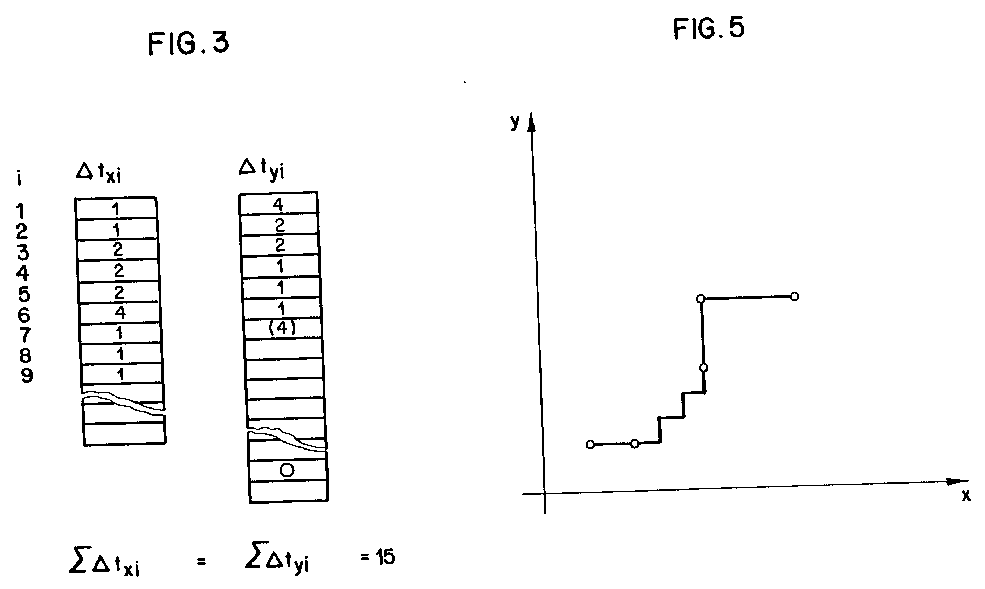

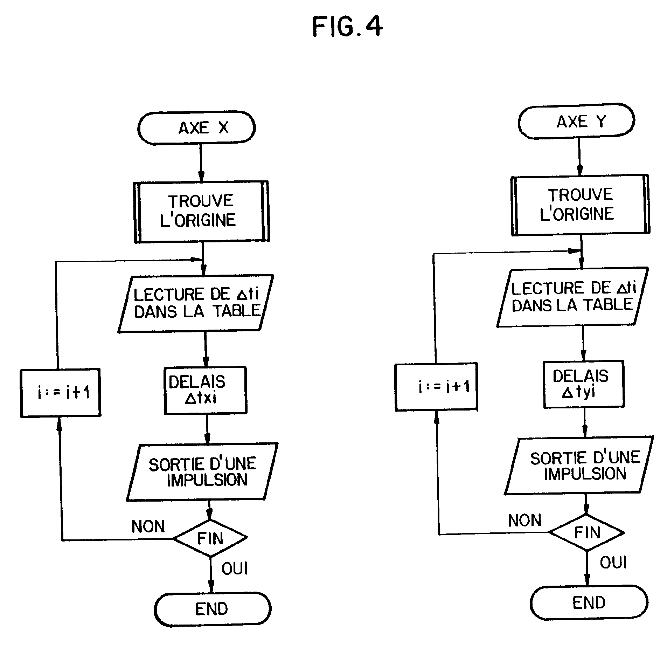

Le document US-A-4 489 260 concerne l'optimisation de la vitesse de déplacement entre deux points théoriques, peu importe la trajectoire entre ces points. Des rangées d'accélération et de décélération (fig. 3 et 4) permettent de générer ces vitesses optimales. Cette méthode est fondamentalement différente de celle faisant l'objet de la présente invention, étant donné que la trajectoire à parcourir n'est pas définie.

Le document US-A-3 297 929 décrit un principe de commande en mode "marche/arrêt" utilisant une table de commande "marche/arrêt" établie en fonction du temps. Les leviers commandent les moteurs qui sont utilisés uniquement en mode "marche/arrêt", ce qui limite fortement les vitesses d'utilisation puisqu'il ne peut y avoir de rampe d'accélération. Les déplacements permis sont très rudimentaires et ne permettent pas d'optimiser la trajectoire ni le temps d'usinage.

Dans "Die numerische Steuerung von Werkzeugmaschinen", du Prof. Dr.-Ing. Whilhelm Simon, Carl Hanser Verlag, Munich 1971, aux pages 277 à 280, on décrit une méthode de calcul illustrant le processus d'interpolation des machines-outils à commande numérique. Il s'agit d'une démonstration mathématique où la table 13 affiche le résultat d'un calcul tel qu'il serait effectué en temps réel. D'autre part, les deux axes sont utilisés de façon successive, plutôt que simultanément, comme l'illustre bien la figure 20.

Il s'agit donc d'une méthode connue de l'état de la technique et mise en pratique par la plupart des machines à contrôle numérique.

Le but de l'invention est de réunir les avantages (vitesse d'exécution, simplicité) des machines à cames et ceux (simplification des opérations de mise en train) des machines numériques par un agencement particulier du dispositif de commande et une conception différente de celle que l'on rencontre dans les machines à commande numérique usuelle, des données à mémoriser pour la commande et le contrôle des mouvements des axes.

Dans ce but, la présente invention a pour premier objet un procédé de commande de déplacements programmés, défini dans les revendications 1 à 8 ainsi qu'un dispositif de commande d'un ou de plusieurs axes dans une machine-outil, selon les revendications 9 à 19.

Ainsi, l'invention consiste principalement dans le fait que la simplicité du système de commande à cames, à boucle ouverte, est associé à la souplesse des actuateurs modernes qui peuvent être des moteurs électriques, des axes hydrauliques, etc. Le changement d'un programme de pièces peut alors être réalisé en un temps très court par rapport à ce qui est nécessaire avec les machines à cames. De plus, la variété possible des programmes n'est plus limités par la dimension finie des cames. Cependant, l'avantage des systèmes à cames consistant en un fonctionnement en boucle ouverte, parfaitement sûr, est conservé avec le dispositif de l'invention.

Une caractéristique essentielle de l'invention est la conception de ce qu'on appelle la table des pas. La structure, le fonctionnement et l'élaboration de la table des pas seront décrits ci-après.

Pour l'établissement de ces tables, l'homme du métier peut appliquer la méthode de compression des données, qui permet d'obtenir des programmes de longueur réduite. Les tables peuvent être traitées par des machines simples, de sorte que les coûts d'installation sont réduits sans incidence sur la variété des usinages possibles ni leur précision.

Selon l'une des caractéristiques de l'invention, on utilise, pour chaque axe, des moteurs incrémentaux ou à fonctionnement incrémental. De tels moteurs sont par exemple des moteurs pas à pas ou des moteurs équipés de systèmes de réglage et fonctionnant de manière analogue à un moteur pas à pas. Un moteur incrémental au sens du présent brevet peut également être un actionneur hydraulique, par exemple un vérin asservi.

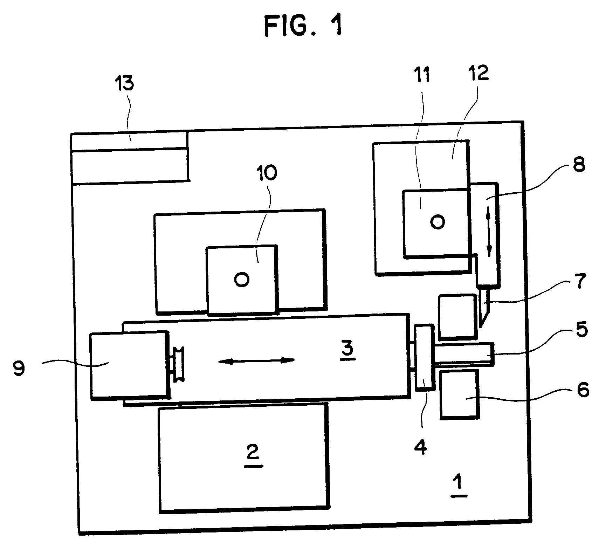

En se basant sur le dessin annexé, on va donc expliquer plusieurs exemples de mise en oeuvre de l'objet de l'invention.
Au dessin, la fig. 1 est une vue en plan de dessus, schématique, d'un tour équipé d'un dispositif de commande selon l'invention,
la fig. 2 est un graphique auxiliaire pour l'élaboration d'une table des pas permettant l'usinage d'une pièce ayant le profil représenté à droite en haut à la fig. 2,
la fig. 3 montre schématiquement les données contenues dans la table des pas qui pilote le programme formant le profil de la pièce de la fig. 2,
la fig. 4 est un ordinogramme partiel et simplifié illustrant la commande d'un outil de tournage pendant l'usinage de la pièce de la fig. 2,
la fig. 5 est un dessin de détail montrant, d'une manière fortement simplifiée, la forme réelle de la pièce usinée selon le schéma de la fig. 2, et
les fig. 6 et 7 sont des graphiques analogues aux fig. 2 et 3 mais relatifs à une variante d'exécution de la table des pas.

La construction générale de la machine d'usinage équipée du dispositif qui va être décrit, ne présente pas de particularités spéciales. Les différents axes sont entraînés par des moteurs incrémentaux ou à fonctionnement incrémental.

Le dispositif de commande comporte un logiciel. L'usinage d'une pièce comporte l'établissement d'un programme dont l'élément essentiel est une table des pas. A partir d'un profil prédéterminé de la pièce P, les déplacements des axes X et Y sont tracés par pas successifs et les intervalles de temps cumulés pour obtenir, en fonction des caractéristiques de la machine et de la pièce, les déplacements voulus sont mis en mémoire sous forme d'une table contenant les déplacements Δtₓᵢ et les déplacements Δt_{yi}. Les lectures des pas effectuées en fonction d'un générateur de signaux d'horloge approprié provoquent l'émission successive des impulsions qui font accomplir aux axes X et Y leurs pas successifs.

On voit à la fig. 1, sur une plaque de base 1, un bâti 2 qui supporte une poupée 3 dont la broche est équipée d'une pince de serrage 4. Une barre à usiner 5 s'étend en saillie à l'avant de la poupée 3 et traverse un canon 6, de sorte que son extrémité se trouve en regard d'un outil de tournage 7 solidaire d'un coulisseau 8. Un moteur de broche 9 fait tourner la pince 4. Un moteur de poupée 10 assure les déplacements vers l'avant et vers l'arrière de la poupée 3. Les commandes d'ouverture et de fermeture de la pièce 4 ne sont pas représentées. Un moteur 11 déplace le coulisseau 8 sur une glissière 12 de manière à commander la position de l'outil dans le sens radial par rapport à l'axe de rotation de la barre 5. L'usinage d'un profil répétitif sur des pièces identiques formées successivement dans la barre 5, implique un travail en axes X et Y, l'axe X étant concrétisé par le moteur 10 et l'axe Y par le moteur 11. La vitesse de rotation de la broche est commandée par le moteur 9 qui est ici indépendant du dispositif de commande décrit. On verra cependant plus loin que, dans certains cas, le moteur d'entraînement de la broche peut également être considéré comme un axe.

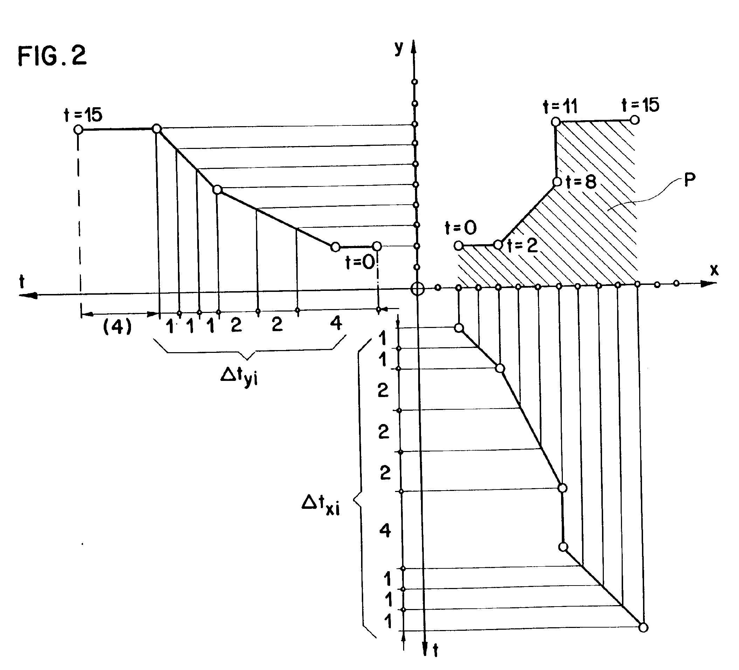

Le graphique de la fig. 2 permet d'expliquer comment on établit une table des pas susceptible d'être incorporée au dispositif de commande électronique 13 du centre d'usinage. Le profil d'une pièce P que l'on désire usiner est représenté schématiquement dans le quadrant à droite en haut du graphique. L'axe x représente l'axe de symétrie de la barre et l'axe y les écarts radiaux de l'outil par rapport à l'axe x. Les opérations à effectuer sont décomposées en mouvements d'outil, quantifiés eux-mêmes en pas de longueur déterminée, choisis en fonction des exigences imposées par le matériel et d'une estimation des mouvements les plus judicieux. Dans ce graphique, l'axe partant du centre et se dirigeant horizontalement vers la gauche de même que celui qui part du centre et se dirige verticalement vers le bas, sont des axes des temps. Les déplacements de l'outil, dans le sens radial, sont reportés sur l'axe y tandis que les déplacements de la poupée sont reportés sur l'axe x. Le point origine de l'usinage est le point désigné par t = 0. On reviendra plus loin sur la recherche de cette position d'origine lors de l'usinage de chaque pièce. A partir de ce point t = 0, la trajectoire de l'outil représentée sur le quadrant à droite en haut du graphique est décomposée en segments. Le quadrant, à droite en bas, montre les déplacements successifs de la poupée dans le sens axial en fonction du temps et le quadrant, à gauche en haut, les déplacements successifs de l'outil en fonction du temps. Ces déplacements sont décomposés en pas fixes en fonction d'intervalles de temps successifs et variables désignés par Δt. Les Δtₓᵢ sont une suite d'intervalles de temps à la fin de chacun desquels la poupée doit avoir effectué un déplacement d'un pas, c'est-à-dire que son moteur doit avoir reçu un ordre d'effectuer un incrément. On voit que, entre le temps t = 0 et le temps t = 2, l'axe X doit avoir effectué un incrément après chaque intervalle de temps, tandis qu'entre le temps t = 2 et le temps t = 8 la poupée doit effectuer un incrément sur deux intervalles de temps successifs. Entre le temps t = 8 et le temps t = 11, la poupée n'effectue aucun déplacement tandis que dans les intervalles de temps qui suivent le temps t = 11 et jusqu'au temps t = 15, la poupée effectue un incrément, à chaque intervalle Δtₓ.

En ce qui concerne le déplacement de l'outil, c'est-à-dire l'axe Y, une décomposition analogue a lieu. Partant de la position de l'outil au temps t = 0, la suite des intervalles de temps est reproduite sur l'axe t vers la gauche, et les incréments du moteur de l'outil sont reportés en ordonnées de façon à obtenir le tracé du quadrant à gauche à haut entre le temps t = 0 et le temps t = 15.

La somme des intervalles de temps est la même pour l'axe Y (Δt_{y}) et pour l'axe X (Δtₓ) (Dans le cas particulier, elle est égale à 15, mais ceci est bien entendu un exemple théorique). En revanche, la répartition des ordres d'incréments, sur chacun des axes, en fonction du déroulement du temps, est différente.

La table des pas proprement dite est représentée à la fig. 3. Chacune des colonnes Δtₓᵢ et Δt_{yi} représente le nombre d'intervalles de temps après lesquels l'axe correspondant doit avoir effectué un déplacement d'un incrément. Cette table permet de programmer le dispositif de commande de façon à usiner une série de pièces successives sur la barre 5 (fig. 1).

On notera encore à propos de la fig. 3 que, dans certains cas, un renversement du sens de déplacement de l'outil peut être exigé. Dans ce cas, la table des pas comportera, pour une position particulière dans la suite des intervalles de temps Δt_{yi}, une instruction relative à un ordre non usuel (par exemple Δt = 0), cet ordre étant interprété comme un renversement du sens de déplacement de l'axe Y.

Le programme proprement dit peut être élaboré facilement sur la base de l'enregistrement de la table des pas. C'est un programme répétitif qui actionne indépendamment l'axe X et l'axe Y. La première opération consiste dans la recherche de la position d'origine, c'est une opération connue sur laquelle il n'est pas nécessaire d'insister. La position d'origine étant trouvée, les séquences de lecture sont entamées sur les Δtₓᵢ et sur les Δt_{yi}.

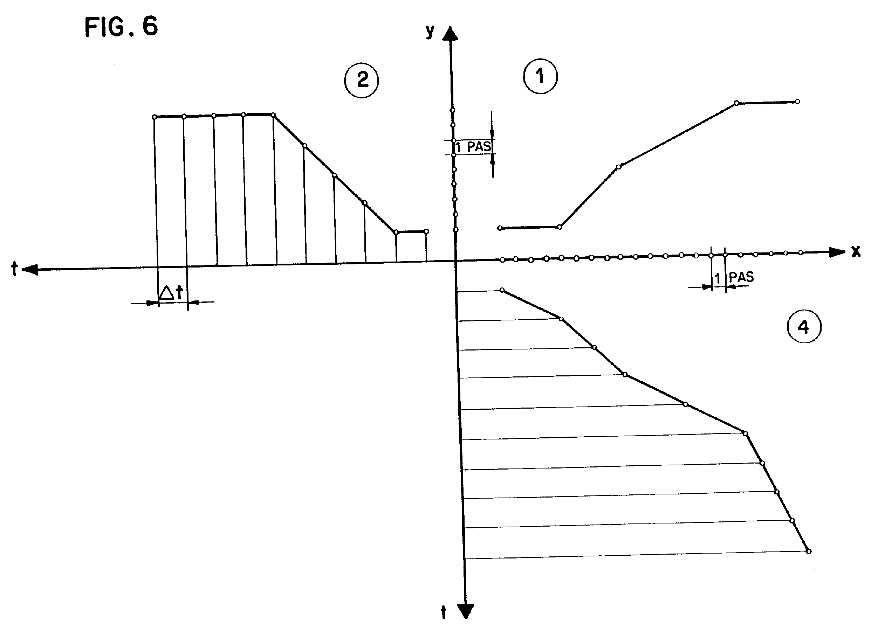

Le dispositif de commande comporte un générateur de signaux d'horloge qui détermine la durée des Δtᵢ. Les données numériques contenues dans ces tables indiquent chaque fois le nombre de Δt qui doivent être comptés avant qu'une impulsion soit émise sur le moteur de l'axe correspondant afin de le déplacer d'un incrément. Les ordinogrammes de la fig. 4 indiquent les opérations qui s'effectuent à chaque séquence de lecture. Chaque séquence comprend la prise en compte du délai correspondant à Δtₓᵢ ou à Δt_{yi} et la sortie de l'impulsion suivante est produite au moment convenable. Le profil réel de la pièce usinée est un profil dont l'allure est celle représentée par la fig. 5. Lors de l'élaboration du programme, on choisira les Δt et les incréments de façon à respecter la dynamique du système eu égard au type de pièces à fabriquer.

Le graphique de la fig. 6 explique une variante d'établissement de la table des pas susceptible d'être incorporée au dispositif de commande électronique 13 de la machine d'usinage. Le profil d'une pièce P que l'on désire usiner et les déplacements successifs de l'outil et de la poupée sont représentés de manière analogue à la fig. 2. Toutefois les déplacements sont décomposés en nombre de pas en fonction d'intervalles de temps successifs fixes, désignés par Δt. Les ΔXᵢ et ΔYi sont des suites de déplacements. A la fin de chaque intervalle Δt, la poupée doit avoir effectué un déplacement Δx prescrit, c'est-à-dire égal à un nombre prescrit de pas. Ainsi, à la fig. 6, on voit qu'à la fin du premier Δt, le déplacement de la poupée doit être de 4 pas, etc.

En ce qui concerne le déplacement de l'outil, c'est-à-dire l'axe Y, une décomposition analogue a lieu. Partant de la position de l'outil au temps t = 0, la suite des intervalles de temps est reproduite sur l'axe t vers la gauche, et les incréments du moteur de l'outil sont reportés en ordonnées de façon à obtenir le tracé du quadrant à gauche à haut entre le temps t = 0 et le temps t = 9.

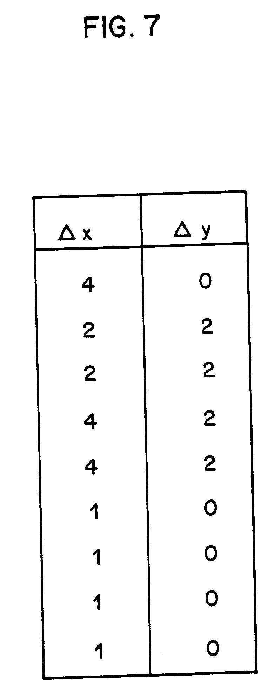

La table des pas proprement dite est représentée à la fig. 7. Chacune des colonnes ΔXᵢ et ΔYᵢ représente le nombre de pas que l'axe correspondant doit effectuer à chaque Δt. Cette table permet de programmer le dispositif de commande de façon à usiner une série de pièces successives sur la barre 5 (fig. 1).

Comme à propos de la fig. 3, dans certains cas un renversement du sens de déplacement de l'outil peut être exigé. Dans ce cas, la table des pas comportera, pour une position particulière dans la suite des intervalles de pas ΔXᵢ, une instruction relative à un ordre non usuel (par exemple ΔY = 100), cet ordre étant interprété comme un renversement du sens de déplacement de l'axe Y.

Le dispositif de commande comporte un générateur de signaux d'horloge de la durée Δt et synchronise la lecture de la table des pas sur l'axe X et sur l'axe Y. Les données numériques contenues dans ces tables indiquent chaque fois le nombre de pas moteur à franchir avant la prochaine impulsion. Lors de l'élaboration, on choisira les incréments de façon à respecter la dynamique du système eu égard au type de pièces à fabriquer.

On sait que si les moteurs sont des moteurs pas à pas, chaque ordre d'incrément amène nécessairement l'organe mobile dépendant du moteur dans une position prédéterminée, de sorte que le fonctionnement en boucle ouverte est fiable pour autant qu'aucune erreur de pas ou qu'aucun décrochement ne se manifeste. L'établissement du programme ne nécessite donc pas de retour de position ni d'interpolation. En revanche, il faut que les pas prévus soient compatibles avec les performances des actuateurs.

On peut prévoir un programme de calcul de la table des pas, susceptible d'être réalisé sur un ordinateur externe à la machine. Des logiciels auxiliaires connus, comme par exemple les logiciels "TB-Logic" de la déposante, peuvent être adaptés pour l'établissement d'un programme de table des pas. Pour limiter la taille de ces tables, il est possible d'avoir recours à des moyens, tels que la compression des données, ce qui permet de réduire le prix de la mémoire informatique.

La table des pas étant calculée dans un ordinateur externe, elle est ensuite transférée, par des moyens qui peuvent être choisis à volonté, dans une mémoire de commande de la machine.

Comme on l'a dit plus haut, la prise d'origine au début de chaque opération est un élément de programme important. La prise d'origine dépend de la position réelle de la pointe de l'outil et, par conséquent, de son degré d'usure. Le dispositif de commande sera donc équipé d'un moyen permettant un décalage d'origine afin de permettre une prise d'origine susceptible d'être corrigée en fonction des caractéristiques de l'outil. Le moyen de décalage permettra tout d'abord un décalage d'origine initial en fonction de la position théorique de la pointe de l'outil, par rapport à une référence sur l'axe, et ensuite, le cas échéant, une correction d'outil qui modifie la position d'origine en fonction d'une variation possible de la forme de l'outil par rapport à sa forme théorique.

Le décalage d'origine initial devra être introduit dans le programme qui calcule la table des pas, tandis que les corrections d'outil se feront par décalage de l'origine, soit à chaque lecture de la table dans une zone sans mouvement prévu, réservée à un déplacement d'amplitude limitée, soit en dehors de la lecture de la table.

Lorsque l'usinage d'une pièce exige une coordination entre la rotation de la broche et la position de l'outil, par exemple lorsqu'il s'agit de fileter une pièce ou de tourner une forme polygonale sur la barre ou d'utiliser la broche en axe C, le moteur d'entraînement 9 de la broche doit fonctionner à l'instar d'un axe incorporé au programme. Dans ce cas, la table des pas peut comporter une suite d'informations relatives à la commande de l'axe de broche. Toutefois, étant donné les fortes sollicitations sur ce moteur, il est aussi possible d'asservir la vitesse de lecture de la table des pas, c'est-à-dire la durée même des intervalles Δt à la vitesse de rotation de la broche. Dans ce cas, les intervalles Δt ne sont plus directement calibrés par des signaux d'horloge mais dépendent de la vitesse instantanée de la broche.

La fréquence f = 1/Δt des signaux d'horloge peut être choisie dans une plage de +f₀ à -f₀. Une fréquence f = +f₀ correspond à la vitesse maximale, une fréquence nulle correspond à l'arrêt et une fréquence négative implique une lecture de la table des pas dans le sens inverse.

On a indiqué précédemment que le risque de dérèglement peut provenir d'un décrochement d'un moteur pas à pas si, par exemple, le couple résistant devient supérieur au couple moteur maximum. Comme le système fonctionne en boucle ouverte, aucune rétroaction sur le déroulement du programme n'existe dans ce cas.

Le dispositif de commande comprendra cependant, pour chaque actuateur, ou chaque moteur actionnant un axe, un moyen de surveillance capable de détecter un fonctionnement anormal et de générer une alarme qui stoppera le déroulement du programme. Le moyen de détection peut comporter un détecteur du déplacement de l'organe mobile lié à l'axe ou de rotation du moteur. Dans ce cas, on prévoit un capteur supplémentaire et un système d'alarme. On peut aussi équiper la partie électrique des actuateurs de systèmes de détection de perte de pas et faire agir l'alarme lorsque le déroulement des impulsions est manifestement de nature telle que le déplacement mécanique qui devait être produit par cette impulsion n'a pas eu lieu. Dans ce cas, des capteurs réagissant aux déplacements des organes mécaniques matériels ne sont plus nécessaires. La surveillance est effectuée uniquement par des moyens électroniques.

On a décrit plus haut l'exemple d'actuateurs constitués par des moteurs pas à pas. Il convient cependant de noter qu'un résultat identique peut être obtenu, par exemple dans le cas d'un moteur à courant continu, à condition qu'il soit équipé d'un système de réglage qui, lorsqu'il enregistre une impulsion, provoque nécessairement un déplacement d'amplitude prédéterminée de ce moteur. On se rend compte que cette façon de faire permet d'utiliser non seulement des moteurs pas à pas mais également des actuateurs, par exemple de type hydraulique, réglés en position. L'impulsion que cet actuateur reçoit revient alors à une nouvelle consigne de position.

## Revendications

1. Procédé de commande de déplacements programmés, effectués par une pluralité de moyens d'entraînement (10,11) à fonctionnement incrémental, actionnant un ou plusieurs organes mobiles d'une machine-outil de manière à réaliser une opération d'usinage sur une ébauche de pièce fixée à un porte-pièce de cette machine, caractérisé en ce qu'un programme de commande utilise les données numériques mémorisées d'une table des pas pour attribuer à chaque moyen d'entraînement une série d'ordres de déplacements incrémentaux (Δtxi,Δtyi) se succédant en fonction d'une variable dépendant du temps, la séquence des ordres étant incluse dans la table des pas, et en ce que ladite table des pas est établie à partir des résultats d'un calcul définissant une trajectoire d'usinage optimale en fonction du temps et permet d'obtenir un profil donné avec un matériau donné en tenant compte des caractéristiques de la machine-outil.

2. Procédé de commande selon la revendication 1, caractérisé en ce que les données numériques de la dite table des pas indiquent, pour chaque déplacement, un nombre variable d'incréments ou de pas à réaliser pendant un nombre fixe d'unités de temps.

3. Procédé de commande selon la revendication 2, caractérisé en ce que chaque ordre de déplacement de la série est donnée sous la forme d'un nombre variable d'incréments, à réaliser pendant un intervalle de temps fixe donné correspondant à un nombre fixe d'unités de temps, ledit nombre variable d'incréments étant établi dans ladite table des pas.

4. Procédé de commande selon la revendication 1, caractérisé en ce que les données numériques de la dite table des pas indiquent, pour chaque déplacement, le nombre d'unités de temps après lesquelles l'axe correspondant doit avoir effectué un déplacement d'un nombre fixe d'incréments.

5. Procédé de commande selon la revendication 4, caractérisé en ce que chaque ordre de déplacement de la série est donnée sous la forme d'un nombre fixe donné d'incréments, à réaliser pendant un intervalle de temps variable, la durée des dits intervalles de temps étant établie dans ladite table des pas en fonction d'un nombre variable d'unités de temps.

6. Procédé de commande selon l'une des revendications 3 ou 5, caractérisé en ce que la valeur de l'unité de temps correspond aux impulsions émises par un générateur de signaux d'horloge.

7. Procédé de commande selon la revendication 6, caractérisé en ce que le générateur de signaux d'horloge détermine des intervalles de temps de durée fixe.

8. Procédé de commande selon la revendication 6, caractérisé en ce que le générateur de signaux d'horloge détermine des intervalles de temps qui sont fonction d'une vitesse de rotation ou de déplacement observée sur un des axes.

9. Dispositif de commande d'un ou de plusieurs axes dans une machine outil,comportant sur chaque axe un moyen d'entraînement (10,11) à fonctionnement incrémental et pour l'ensemble des axes (x,y), une mémoire de données numériques, caractérisé en ce que le dispositif de commande comprend également un générateur de signaux d'horloge et un programme de commande, et en ce que ledit programme de commande, au moyen des données numériques contenues dans une table des pas telle que définie dans la revendication 1, attribue à chaque moyen d'entraînement une série de consignes de déplacement sous la forme d'ordres d'incréments (Δxi,Δyi) transmis à des intervalles de temps établis par le générateur de signaux d'horloge.

10. Dispositif de commande selon la revendication 9, caractérisé en ce que la table des pas comporte pour chaque axe, en regard d'une série d'intervalles de temps, une suite d'ordre de pas, chaque ordre étant attribué à un intervalle de temps de ladite série des intervalles de temps, permettant au programme de commande de commander au moyen d'entraînement attribué à l'axe l'exécution d'un nombre variable entier de pas, ce nombre de pas étant égal à zéro, à un, ou à tout nombre entier supérieur à un.

11. Dispositif de commande selon la revendication 10, caractérisé en ce que la table des pas est agencée de sorte que chaque donnée détermine en outre pour chaque axe un délai de réalisation du dit nombre de pas.

12. Dispositif de commande selon la revendication 11, caractérisé en ce que la table des pas est agencée de sorte qu'au moins un des dits intervalles de temps prédéterminés provoque un ordre de renversement de sens sur au moins un des axes, cet intervalle de temps ne provoquant aucun autre ordre.

13. Dispositif de commande selon la revendication 12, caractérisé en ce que le dit générateur de signaux d'horloge détermine les dits intervalles de temps, les compte, et synchronise l'exécution des ordres en fonction de ces derniers.

14. Dispositif de commande selon la revendication 13, caractérisé en ce que le générateur de signaux d'horloge détermine des intervalles de temps de durée fixe.

15. Dispositif de commande selon la revendication 14, caractérisé en ce que le générateur de signaux d'horloge détermine des intervalles de temps qui sont fonction d'une vitesse de rotation ou de déplacement observée sur un des axes.

16. Dispositif de commande selon l'une des revendications 9 à 15, caractérisé en ce que le programme de commande comporte des moyens pour effectuer de manière répétitive, sur chaque axe, des recherches de position d'origine, suivies chacune par un ordre d'exécution de pas et, en outre, un moyen de décalage de la position d'origine.

17. Dispositif de commande selon l'une des revendications 9 à 15, caractérisé en ce qu'il comporte des moyens de détection d'une exécution anormale du programme et des moyens de contrôle permettant d'arrêter le déroulement du programme lors d'une détection d'exécution anormale.

18. Dispositif de commande selon la revendication 17, caractérisé en ce que les moyens de détection comportent, pour au moins un moyen d'entraînement d'un axe, un détecteur de perte de pas associé à ce moteur.

19. Dispositif de commande selon la revendication 17, caractérisé en ce que les moyens de détection comportent, pour au moins un axe, un détecteur de déplacement d'un organe mobile associé à cet axe.

## Patentansprüche

1. Verfahren zum Steuern von programmierbaren Verstellungen, die durch eine Mehrzahl von Antriebsmitteln (10, 11) im Inkrementalbetrieb ausgeführt werden, die ein oder mehrere bewegbare Mittel einer Werkzeugmaschine antreiben, so dass eine Bearbeitung eines Werkstückes, das in einem Werkstückhalter dieser Maschine befestigt ist, ausführbar ist, dadurch gekennzeichnet, dass ein Steuerprogramm die numerischen gespeicherten Daten einer Schritttabelle verwendet, um jedem Antriebsmittel eine Folge von inkrementalen Verstellbefehlen (Δtₓᵢ, Δt_{yi}) zuzuteilen, die sich in Funktion einer von der Zeit abhängigen Variablen folgen, wobei die Befehlsfolge in der Schritttabelle eingeschlossen ist, und dass die genannte Schritttabelle aufgrund der Resultate einer Berechnung errichtet ist, die eine optimale Bearbeitungsbahn in Funktion der Zeit definiert, und die erlaubt, ein gegebenes Profil mit einem gegebenen Material unter Berücksichtigung der Eigenschaften der Werkzeugmaschine zu erhalten.

2. Verfahren zum Steuern nach Anspruch 1, dadurch gekennzeichnet, dass die gegebenen Zahlen der genannten Schritttabelle für jede Verstellung eine variable Anzahl von Inkrementen oder Schritten, die während einer Anzahl von festen Zeiteinheiten auszuführen sind, angeben.

3. Verfahren zum Steuern nach Anspruch 2, dadurch gekennzeichnet, dass jeder Verstellbefehl der Folge in Form einer variablen Anzahl von Inkrementen gegeben wird, welche während eines festen, gegebenen Zeitintervalls, welches einer Anzahl von festen Zeiteinheiten entspricht, auszuführen sind, wobei die variable Anzahl von Inkrementen in der genannten Schritttabelle errichtet ist.

4. Verfahren zum Steuern nach Anspruch 1, dadurch gekennzeichnet, dass die gegebenen Zahlen der genannten Schritttabelle für jede Verstellung die Anzahl Zeiteinheiten angeben, nach welchen die entsprechende Achse eine Verstellung mit einer festen Anzahl von Inkrementen ausführen soll.

5. Verfahren zum Steuern nach Anspruch 4, dadurch gekennzeichnet, dass jeder Verstellbefehl der Folge in Form einer festen gegebenen Zahl von Inkrementen gegeben wird, welche während eines variablen Zeitintervalls auszuführen sind, wobei die Dauer der genannten Zeitintervalle in der genannten Schritttabelle in Funktion einer variablen Zahl von Zeiteinheiten festgelegt ist.

6. Verfahren zum Steuern nach einem der Ansprüche 3 oder 5, dadurch gekennzeichnet, dass der Wert der Zeiteinheit Impulsen entspricht, die durch einen Zeitsignalgenerator emittiert werden.

7. Verfahren zum Steuern nach Anspruch 6, dadurch gekennzeichnet, dass der Zeitsignalgenerator die Zeitintervalle von fixer Dauer festlegt.

8. Verfahren zum Steuern nach Anspruch 6, dadurch gekennzeichnet, dass der Zeitsignalgenerator die Zeitintervalle in Funktion von einer Rotationsgeschwindigkeit oder Verstellgeschwindigkeit festlegt, die auf einer der Achsen beobachtet werden.

9. Einrichtung zum Steuern einer oder mehrerer Achsen in einer Werkzeugmaschine, welche auf jeder Achse ein inkremental funktionierendes Antriebsmittel (10, 11) und für die Gesamtheit der Achsen (x, y) einen Speicher für gegebene Zahlengrössen umfasst, dadurch gekennzeichnet, dass die Einrichtung zum Steuern auch einen Zeitsignalgenerator und ein Steuerprogramm umfasst, und dass das genannte Steuerprogramm mittels der gegebenen Zahlengrössen, die in der Schritttabelle enthalten sind, wie im Anspruch 1 definiert ist, an jedes Antriebsmittel eine Reihe von Anweisungen zur Verstellung in Form von Inkrementalbefehlen (ΔXᵢ,Δ Yᵢ) zuweist, übermittelt in Zeitintervallen, die durch den Zeitsignalgenerator gebildet sind.

10. Einrichtung zum Steuern nach Anspruch 9, dadurch gekennzeichnet, dass die Schritttabelle für jede Achse, im Vergleich zu einer Folge von Zeitintervallen, eine Folge von Schrittbefehlen umfasst, wobei jeder Befehl in einem Zeitintervall der genannten Folge von Zeitintervallen zugeordnet ist, wodurch dem Steuerprogramm erlaubt wird, die den Achsen zugeteilten Antriebsmittel die Ausführung einer variablen Anzahl von ganzen Schritten zu übertragen, wobei diese Anzahl Schritte gleich null, eins, oder irgend eine ganze Zahl grösser als eins sein kann.

11. Einrichtung zum Steuern nach Anspruch 10, dadurch gekennzeichnet, dass die Schritttabelle so ausgebildet ist, dass jede gegebene Grösse unter anderem für jede Achse einen Ausführungszeitpunkt der genannten Schrittanzahl bestimmt.

12. Einrichtung zum Steuern nach Anspruch 11, dadurch gekennzeichnet, dass die Schritttabelle so ausgebildet ist, dass mindestens eines der genannten vorbestimmten Zeitintervalle eine Anweisung zur Richtungsumkehr auf mindestens eine der Achsen bewirkt, wobei dieses Zeitintervall keine andere Anweisung bewirkt.

13. Einrichtung zum Steuern nach Anspruch 12, dadurch gekennzeichnet, dass der genannte Zeitsignalgenerator die genannten Zeitintervalle bestimmt, sie zählt, und die Ausführung dieser Anweisungen mit diesen letzteren synchronisiert.

14. Einrichtung zum Steuern nach Anspruch 13, dadurch gekennzeichnet, dass der Zeitsignalgenerator die Zeitintervalle mit einer festen Dauer bestimmt.

15. Einrichtung zum Steuern nach Anspruch 14, dadurch gekennzeichnet, dass der Zeitsignalgenerator die Zeitintervalle in Funktion einer Rotationsgeschwindigkeit oder einer Verstellgeschwindigkeit einer Achse bestimmt.

16. Einrichtung zum Steuern nach einem der Ansprüche 9 bis 15, dadurch gekennzeichnet, dass das Steuerprogramm Mittel, mit welchen wiederholbar auf jeder Achse die Ursprungsposition ermittelbar ist, wobei jeder Ermittlung ein Schrittausführungsbefehl nachfolgt, und im weiteren Mittel zur Verschiebung der Ursprungsposition enthält.

17. Einrichtung zum Steuern nach einem der Ansprüche 9 bis 15, dadurch gekennzeichnet, dass Mittel zur Ueberwachung von einer abnormalen Ausführung des Programmes und Mittel zur Steuerung vorgesehen sind, mit welchen der Ablauf des Programms bei der Entdeckung eines abnormalen Ablaufs gestoppt werden kann.

18. Einrichtung zur Steuerung nach Anspruch 17, dadurch gekennzeichnet, dass die Mittel zur Ueberwachung für mindestens ein Antriebsmittel einer Achse einen Schrittverlust-Detektor aufweisen, der mit diesem Motor verbunden ist.

19. Einrichtung zur Steuerung nach Anspruch 17, dadurch gekennzeichnet, dass die Mittel zur Ueberwachung für mindestens eine Achse einen Verschiebedetektor für ein mit dieser Achse verbundenes, bewegbares Element aufweisen.

## Claims

1. Method to control programmed movements carried out by a plurality of drive means (10, 11) functioning incrementally, actuating one or more moving parts of a machine tool in a manner to carry out a machining operation on a rough workpiece fixed to a workpiece holder of said machine, wherein an operational programme uses numerical data stored in a step table for distributing to each drive means a series of incremental displacement orders (Δtₓᵢ, Δt_{yi}) succeeding one another according to a dependent variable of time, the sequence of orders being included in the step table and wherein the said step table is set up to give the results of a calculation defining an optimal machining trajectory as a function of time and permits obtaining a given profile with a given material taking into account the characteristics of the machine tool.

2. Control method according to claim 1, wherein the numerical data of the said step table indicates, for each displacement, a variable number of increments or of steps to be carried out during a fixed number of time units.

3. Control method according to claim 2, wherein each displacement order of the series is given in the form of a variable number of increments, to be realized during a fixed time interval corresponding to a fixed number of time units, the said variable number of increments being established in the said step table.

4. Control method according to claim 1, wherein the numerical data of the said step table indicates, for each displacement, the number of time units after which the corresponding axis will have carried out a displacement by a fixed number of increments.

5. Control method according to claim 4, wherein each order of displacement of the series is given in the form of a fixed number of increments to be carried out during a variable time interval, the duration of the said time intervals being set out in the said step table as a function of a variable number of time units.

6. Control method according to one of the claims 3 or 5, wherein the value of the unit of time corresponds to impulses emitted by a clock signal generator.

7. Control method according to claim 6, wherein the clock signal generator determines time intervals of a fixed duration.

8. Control method according to claim 6, wherein the clock signal generator determines time intervals which are a function of an observed speed of rotation or of displacement on one of the axes.

9. Device for controlling one or more axes in a machine tool, comprising a drive means (10, 11) functioning incrementally on each of said axes and, for all of said axes (X, Y), a memory containing numerical data wherein the control device likewise includes a clock signal generator and an operational programme, and wherein the said operational programme, by means of numerical data contained in a step table as defined in claim 1, distributes to each drive means a series of displacement orders in the form of transmitted increment orders (Δₓᵢ,Δ_{yi}) of time intervals established by the clock signal generator.

10. Control device according to claim 9, wherein the step table includes for each axis, with respect to a series of time intervals, a series of command steps, each command being given at a time interval of the said series of time intervals, permitting the operational programme to command execution of a variable whole number of steps by means of the drive attributed to the axis, the number of steps being equal to zero, to one or to any integer greater than one.

11. Control device according to claim 10, wherein the step table is laid out in such a way that each datum determines in addition for each axis a time limit for carrying out the said number of steps.

12. Control device according to claim 11, wherein the step table is laid out in such a way that at least one of the said predetermined time intervals causes an order of direction reversal on at least one of the axes, this time interval not causing any other order.

13. Control device according to claim 12, wherein the said clock signal generator determines the said time intervals, counts them and synchronizes the execution of the orders on the basis thereof.

14. Control device according to claim 13, wherein the clock signal generator determines intervals of time of fixed duration.

15. Control device according to claim 14, wherein the clock signal generator determines time intervals which are a function of the speed of rotation or of displacement observed on one of the axes.

16. Control device according to one of the claims 9 to 15, wherein the operational programme includes means for repetitively carrying out, on each of said axes, origin-position searches each followed by an order to execute a step, and further comprises an origin-position shifting means.

17. Control device according to one of the claims 9 to 15, wherein included are means for detecting abnormal execution of the programme and monitoring means allowing the running of said programme to be stopped upon detection of abnormal execution.

18. Control device according to claim 17, wherein the means for detecting comprise, for at least one said motor of one of said axes, a step-loss detector associated with said motor.

19. Control device according to claim 17, wherein the means for detecting include, for at least one axis, a detector of displacement of a moving part associated with said axis.
